# EUROPEAN PATENT APPLICATION

(11) **EP 4 624 020 A1**
(43) Date of publication of application: **01.10.2025**
(21) Application number: 24166794.8
(22) Date of filing: 27.03.2024
(51) Int. Cl.: B01D 46/00, B01D 46/121

(54) **GASKET ASSEMBLY FOR A FILTER DEVICE WITH A TRANSITION POINT**

(71) Applicant: AAF LTD., Cramlington, Northumberland NE23 8AF (GB)
(72) Inventor: White, John, Bedlington Northumberland NE22 7EN (GB); Smith, Mark, White Bay NE25 0PU (GB); Tumbul, Graeme Denton, Nothumberland NE638JQ (GB)
(74) Representative: Haseltine Lake Kempner LLP

(57) **Abstract**

The present invention relates to a gasket assembly for filter devices comprising a mounting element, at least one first filter element, at least one second filter element arranged adjacent to the first filter element, and a first gasket being pressed against the mounting element and the second filter element by means of the first filter element, wherein a pressure means is provided that is intended to additionally press the transition point between the mounting element and the second filter element.

## Description

### Field of the invention

The invention refers to a gasket assembly for a filter device comprising a mounting element, at least one first filter element, at least one second filter element arranged adjacent to the first filter element, and a first gasket to be pressed against the mounting element and the second filter element by means of the first filter element, whereby a transition point or area is present at the first gasket between the mounting element and the second filter element.

### Background of the invention

A state-of-the-art filter device is arranged, for example, in front of a gas turbine in order to clean a fluid which is sucked into the gas turbine. In such gas turbines blades are arranged, which need to be protected against dust, solids, free water and salt. Even if only very small solids enter the gas turbine, huge damage might be caused. Hence, highest demands are applied on the filter device. For this purpose, the filter device contains several filter elements, each with a filter medium held by a frame. The fluid flowing through the filter medium is thus cleaned. The filter elements are arranged at one or more mounting elements. A mounting element is any element in the filter device to which arbitrary components, for example the first and the second filter elements are to be attached. There are transition areas between the filter elements as well as between the filter elements and the mounting element, which need to be sealed. For this purpose, the filter device includes a gasket assembly with gaskets such as the first gasket.

Particularly difficult is the sealing of the transition areas at such points where the gasket must bridge a transition from one component to an adjacent component, such as between the mounting element and the second filter element. It is therefore an object of the present invention to improve the gasket assembly and to make the filter device more reliable.

### Summary

To achieve the above objects, according to one aspect of the present invention there is provided a gasket assembly for a filter device comprising a mounting element, at least one first filter element, at least one second filter element arranged adjacent to the first filter element, and a first gasket to be pressed against the mounting element and the second filter element by means of the first filter element, whereby a transition point or area is present at the first gasket in the area between the mounting element and the second filter element, wherein a pressure means is provided that is intended to additionally press down the first gasket at the transition point or area.

The pressure means is any means that may be used to squeeze or press an object. In other words, the pressure means is a kind of stress concentrator for the gasket, which concentrates or rises the local stress on the pressing surface of the gasket. In an preferred embodiment of the invention the pressure means provides at least 25 %, preferably 30%, more preferably 35% more compression on the gasket at the transition area compared to other locations. In particular the contact pressure onto the pressing surface of the gasket might be at least doubled or tripled by the pressure means. Preferably the pressure means is simply a solid object to which a pressure is to be supplied. The transition point is basically the point where one element ends and another begins. At this point an element surface is usually not as uniform as at other points, making it more difficult to apply the gasket there. This fact implies the risk that the gasket is not completely applied, forms a gap and makes the filter device leaking. Thus such point is quite critical.

The pressure means according to the invention presses down the gasket at the transition point stronger than the gasket is pressed down at other points, where no transition is present. Thus, the tightness of the filter device is guaranteed also at this point of transition. Besides, and surprisingly, the additional pressure means according to the invention ensures that the gasket is even better fixed between the elements. Furthermore, the risk of slippage of the gasket is even lower.

Preferably, the pressure means is formed as a bulge of the first filter element. Thus, the pressure means protrudes from the first filter element by means of the bulge. The bulge is preferably formed as a rib or a nub. With this bulge, a stable pressing means and a sealed transition point may be realised in a very simple manner.

According to a further aspect of the invention the pressure means is made with the first filter element in one piece. To be made in one piece implies that the pressure means and the first filter element are one and the same item. Thus, the pressing means must be planned or provided during the production of the first filter element. Since the shape of the first filter element must be fully designed anyway, the consideration of the pressure means is hardly an additional effort. In addition, there are cost savings, because there is no separate object to be attached to the first filter element.

Advantageously, the first gasket is made of silicone. Silicones are synthetic polymers, typically heat-resistant and rubber-like, and therefore very suitable materials for gaskets, especially in filter devices.

In a further embodiment of the invention the gasket assembly further comprises a second gasket at the second filter element, whereby the second gasket is pressed against the mounting element by means of the second filter element. The second gasket is arranged between the mounting element and the second filter element to seal the transition area therebetween. Thus, the second gasket itself forms the transition between the mounting element and the second filter element. Advantageously, the second gasket ends at the transition point and is formed there in a soft manner, both geometrically and in material. As a result, the transition point is easier to seal, with less pressure needed.

Further preferred, the first gasket is made of a softer material than the second gasket. The softer material means a material which is easier to compress. With the softer material, uneven surfaces, as at transition points, are easier to compensate and to seal. However, the second gasket does not have to compensate any transition points. Therefore, a more solid material is suited better in order to hold the second filter element in place. The holding of the position of the first filter element is already ensured by the pressure means, so that the first gasket is not necessary for this purpose.

In an advantageous improvement of the invention the second gasket is made of an elastomer, preferably made of ethylene propylene diene monomer rubber.

The elastomer is a polymer with both viscosity and elasticity, also referred to as viscoelasticity. Viscoelastic materials combine immediately reversible and time-dependent irreversible deformability. Further the elastomer is a more solid material than, for example, silicone. Ethylene propylene diene monomer rubber, short EPDM rubber, is an elastomer with outstanding resistance to heat,
steam and weather, and is therefore a very suitable material for gaskets with the purpose of the second gasket.

According to a preferred embodiment of the invention, the first filter element is formed with two or more of the pressure means. Two pressure means enable the first filter element to press the first gasket simultaneously at two transition points. Thus, the tightness of the filter device is guaranteed at two transition points by means of only one element, the first filter element.

Preferably, the mounting element is formed as a cross member. The cross member is a horizontally arranged bar, to which several filter elements are to be arranged side by side. It forms one row of several superposed rows of filter elements in the filter device. On the cross member as a common mounting element, several transition points may be uniformly sealed by a number of equal pressing means. This saves costs in production and installation.

According to another aspect of the invention the mounting element has an elongated and straight form, whereby several first filter elements and several second filter elements are arranged alternately along the mounting element. To be arranged alternately means that along the mounting element initially a first filter element, then a second filter element and then again a first filter element is located, and so on. Thus, each first filter element has only second filter elements as adjacent filter elements and vice versa. Hence, several transition points between the mounting element and second filter elements are uniformly sealable by the first filter elements. Again, costs are saved in production and installation.

### Brief description of the drawings

The invention will now be described in greater detail, by way of example, with reference to schematic drawings, in which:
- Fig. 1: is a perspective view of a gasket assembly according to the present invention,
- Fig. 2: is a section taken along line II - II in Fig. 1 and
- Fig. 3: is a cross-sectional view of the detail III in Fig. 2.

### Detailed description of the invention

Before the present assembly is described in detail, it is to be understood that this invention is not limited to the assembly described, as this may vary. It is also to be understood that the terminology used in the description is for the purpose of describing the particular versions or embodiments only, and is not intended to limit the scope of the present invention which will be limited only by the appended claims.

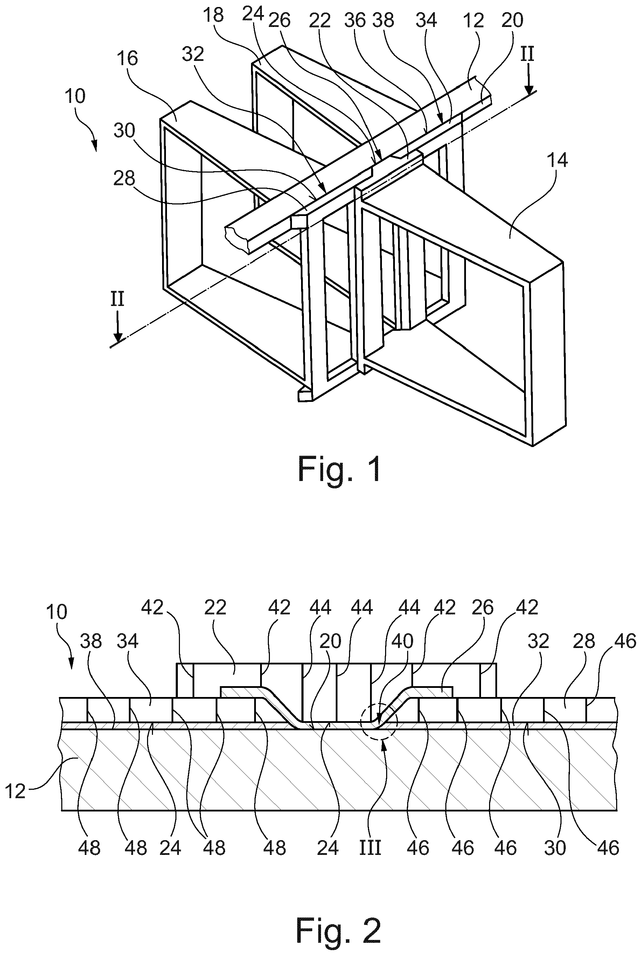

Fig. 1 depicts a gasket assembly 10 in a first embodiment of the invention. To get a complete overview, the gasket assembly 10 is shown by means a mounting element 12 and three filter elements 14, 16, 18 mounted to the mounting element 12 in a filter device. Specifically, a first filter element 14, a second filter element 16 and a third filter element 18 are attached to a mounting surface 20 of the mounting element 12. The mounting element 12 is formed as a cross member. The first filter element 14 is arranged at the mounting element 12 between the other two filter elements 16, 18 and extends away from the mounting surface 20. The first filter element 14 has a first frame element 22, with a first contact surface 24 facing the mounting surface 20. Between the first contact surface 24 and the mounting surface 20 a first gasket 26 is arranged.

The second filter element 16 and the third filter element 18 extend in the opposite direction as the first filter element 14. Thereby, the second filter element 16 engages around the mounting element 12 with a second frame element 28, so that a second contact surface 30 faces the mounting surface 20. Between the second contact surface 30 and the mounting surface 20 a second gasket 32 is arranged. With respect to the above described features, the third filter element 18 is formed in the same way as the second filter element 16. Thus, the third filter element 18 has a third contact surface 36, wherein between the third contact surface 36 and the mounting surface 20 a third gasket 38 is arranged.

The filter device for which the gasket assembly 10 may be used is intended for cleaning of gaseous fluids such as air or steam. The purpose of the gasket assembly 10 is to ensure that the fluid is passed only through the channels dedicated therefor. The frame elements 22, 28, 34 together with the mounting surface 20 form a structure to be sealed, so that the fluid to be filtered flows exclusively through the filter elements 14, 16, 18. The sealing of said structure is ensured by means of the gaskets 26, 32, 38 between the mounting surface 20 and the frame elements 22, 28, 34.

Fig. 2 depicts the gasket assembly 10 in a detail view of the section along line II - II in Fig. 1. The most important new detail visible is the transition point 40 at the transition of the first gasket 26 from the mounting element 12 to the second frame element 28. For simplicity, only this one transition point 40 will be considered, even if more such transition points are arranged at the first gasket 26, for example at the transition from the mounting element 12 to the third frame element 34. Further, the first gasket 26 extends beyond the area between the mounting surface 20 and the first contact area 24. Thus, the first gasket 26 is at least partially also arranged between the first and second frame element 22, 28, as well as between the first and the third frame element 22, 34.

Furthermore, various support members 42, 44, 46, 48 are visible in Fig. 2, which serve to stabilise the frame elements 22, 28, 34. Specifically, the first frame element 22 includes some short support members 42 and some longer support members 44. The second frame element 28 contains only short support members 46. Also the third frame element 34 contains short support members 48 only.

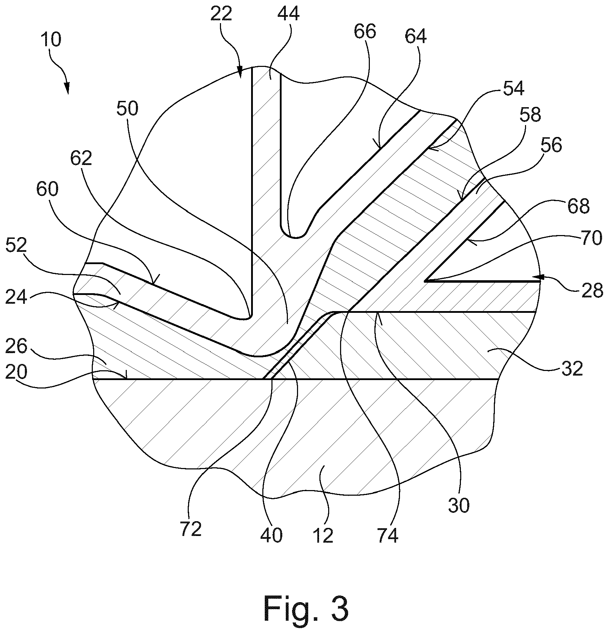

Specifically the transition point 40 is sealed by the gasket assembly 10 according to the invention, as the following Figure 3 shows. By means of an extension of the first gasket 26 into the area between the first frame element 22 and the second frame element 28, said structure to be sealed is additionally secured.

Fig. 3 depicts with detail III of Fig. 2 an enlarged view of the gasket assembly 10 at and around the transition point 40. A further detail visible is the pressure means 50, formed as a bulge of the first frame element 22 at the transition point 40. In addition, here a first element wall 52 of the first frame element 22 is visible, with said first contact surface 24 which faces the mounting surface 20, and a contact surface 54 which faces the second frame element 28. Also, a second element wall 56 of the second frame element 28 is visible, with said second contact surface 30 which faces the mounting surface 20, and a contact surface 58 which faces the first frame element 22. The first frame element 22 at the inner side of the first element wall 52 is divided by one of the longer support elements 44. This results in a first inside surface 60 which forms a first inside corner 62 with the support element 44, and a second inside surface 64 which forms a second inside corner 66 with the support element 44. The second element wall 56 of the second frame element 28 also forms with its inside surface 68 an inside corner 70.

Because of the two gaskets 26, 32 meeting at the transition point 40, there are two further transition points, specifically a first transition point 72 on the mounting surface 20 and a second transition point 74 on the second frame element 28. Thus, the transition point 40 is actually a critical area extending from the mounting surface 20 to the second frame member 28. It should be pointed out, however, that this only applies if, as here, the second gasket 32 between the mounting surface 20 and the second contact surface 30 is present. In this embodiment of the invention the second gasket 32 ends at the second transistion point 74.

At the transition point 40 or at the area bounded by the transition points 72, 74, the two gaskets 26, 32 are pressed together. More specifically, the first gasket 26 is pressed against the second gasket 32 by means of the bulge 50. In this embodiment, the first gasket 26 is made of silicone and the second gasket is made of EPDM rubber. Thus, the first gasket 26 is softer than the second gasket 32 and is therefore compressed more strongly. Any possibly previously exisiting leaks around the ciritcal point 40, for example at the first or second transition point 72, 74 of the gaskets 26, 32, are thereby securely closed.

The previous detailed description has been provided for the purposes of illustration and description. Thus, although there have been described particular embodiments of the present invention of a new and useful gasket assembly, it is not intended that such references be constructed as limitations up-on the scope of this invention except as set forth in the following claims.

### List of reference signs

- 10: gasket assembly
- 12: mounting element
- 14: filter element
- 16: filter element
- 18: filter element
- 20: mounting surface
- 22: frame element
- 24: contact surface
- 26: gasket
- 28: frame element
- 30: contact surface
- 32: gasket
- 34: frame element
- 36: contact surface
- 38: gasket
- 40: transition point
- 42: support member
- 44: support member
- 46: support member
- 48: support member
- 50: pressure means
- 52: element wall
- 54: contact surface
- 56: element wall
- 58: contact surface
- 60: inside surface
- 62: inside corner
- 64: inside surface
- 66: inside corner
- 68: inside surface
- 70: inside corner
- 72: transition point
- 74: transition point

## Claims

1. A gasket assembly (10) for a filter device comprising:
a mounting element (12), at least one first filter element (14), at least one second filter element (16) arranged adjacent to the first filter element (14), and a first gasket (26) to be pressed against the mounting element (12) and the second filter element (16) by means of the first filter element (14), whereby a transition point (40) is present at the first gasket (26) between the mounting element (12) and the second filter element (16),
**characterised in that** a pressure means (50) is provided that is intended to additionally press down the first gasket (26) at the transition point (40).

2. The gasket assembly (10) according to claim 1,
**characterised in that** the pressure means (50) is formed as a bulge of the first filter element (14).

3. The gasket assembly (10) according to claim 1 or 2,
**characterised in that** the pressure means (50) is made with the first filter element (14) in one piece.

4. The gasket assembly (10) according to one of claims 1 to 3,
**characterised in that** the first gasket (26) is made of silicone.

5. The gasket assembly (10) according to one of claims 1 or 4,
**characterised in that** the gasket assembly (10) further comprises a second gasket (32) at the second filter element (16), whereby the second gasket (32) is pressed against the mounting element (12) by means of the second filter element (16).

6. The gasket assembly (10) according to claim 5,
**characterised in that** the first gasket (26) is made of a softer material than the second gasket (32).

7. The gasket assembly (10) according to claim 5 or 6,
wherein the second gasket (32) is made of an elastomer, preferably made of ethylene propylene diene monomer rubber.

8. The gasket assembly (10) according to one of claims 1 to 7,
**characterised in that** the first filter element (14) is formed with two of the pressure means (50).

9. The gasket assembly (10) according to one of claims 1 or 8,
**characterised in that** the mounting element (12) is formed as a cross member.

10. The gasket assembly (10) according to one of claims 1 to 9,
**characterised in that** the mounting element (12) has an elongated and straight form, whereby several first filter elements (14) and several second filter elements (16) are arranged alternately along the mounting element (12).
